(19) Europäisches Patentamt

European Patent Office

Office européen des brevets

(11) EP 0 919 800 B1

(12) FASCICULE DE BREVET EUROPEEN

(45) Date de publication et mention
de la délivrance du brevet:
**29.01.2003 Bulletin 2003/05**

(51) Int Cl.⁷: **G01N 11/02**

(21) Numéro de dépôt: **98402578.3**

(22) Date de dépôt: **16.10.1998**

(54) **Procédé de mesure de la viscosité d'un fluide**

Verfahren zur Messung der Viskosität eines Fluidums

Method for measuring the viscosity of a fluid

(84) Etats contractants désignés:
**DE DK ES GB IT NL**

(30) Priorité: **28.11.1997 FR 9715042**

(43) Date de publication de la demande:
**02.06.1999 Bulletin 1999/22**

(73) Titulaire: **SCHLUMBERGER Systèmes**
**92120 Montrouge (FR)**

(72) Inventeurs:
• **Nitecki, Jean Pierre**
**78530 Buc (FR)**
• **Siri, Patrick**
**80100 Abbeville (FR)**

(74) Mandataire: **Cabinet HERRBURGER**
**115, Boulevard Haussmann**
**75008 Paris (FR)**

(56) Documents cités:
**US-A- 4 384 472**　　**US-A- 4 941 345**
**US-A- 5 056 357**　　**US-A- 5 172 585**
**US-A- 5 447 440**　　**US-A- 5 661 232**

• **PATENT ABSTRACTS OF JAPAN vol. 095, no.
008, 29 septembre 1995 & JP 07 128211 A
(DAINIPPON INK & CHEM INC), 19 mai 1995**
• **KALOTAY P ET AL: "ON-LINE VISCOSITY
MEASUREMENT WITH CORIOLIS MASS FLOW
METERS" ADVANCES IN INSTRUMENTATION
AND CONTROL, vol. 46, no. PART 02, 1 janvier
1991, pages 1029-1039, XP000347545**

**Description**

La présente invention concerne un procédé de mesure d'un débit et de la viscosité d'un fluide.

L'invention trouve une application particulièrement avantageuse dans le domaine général de l'hydraulique, et plus spécialement dans celui de la mesure de précision du volume de fluide délivré par un appareil de distribution, notamment un distributeur de carburant.

Les appareils de distribution de carburant sont équipés d'un organe de mesure du volume de carburant délivré. Cet organe, appelé aussi mesureur, est généralement un compteur du type volumétrique qui peut être mécanique ou statique.

Un mesureur mécanique a pour fonction de produire à partir de l'écoulement du carburant un mouvement de rotation dont une révolution complète correspond à un volume donné du carburant traversant le mesureur. Un système d'encodage optique ou magnétique couplé au mouvement de rotation fournit un signal électrique constitué d'une série d'impulsions dont chacune correspond au pas volumétrique de mesure, 1cl par exemple.

Les mesureurs statiques sont ceux qui ne comportent pas de pièces en mouvement. On peut citer les mesureurs à ultrasons et les oscillateurs fluidiques.

Pour certains mesureurs, notamment les oscillateurs fluidiques, le résultat de la mesure de volume peut être influencé par la viscosité du fluide, et plus précisément le nombre de Reynolds, lequel intervient sous la forme d'une fonction d'erreur par rapport à une fonction principale, indépendante du nombre de Reynolds. C'est le cas en particulier pour les oscillateurs fluidiques dont la fréquence d'oscillation est, en première approximation, proportionnelle au débit du fluide. Cependant un terme correctif dépendant du nombre de Reynolds doit être pris en compte si l'on veut obtenir une précision suffisante.

D'autre part, il faut souligner que la viscosité d'un fluide n'est pas toujours constante du fait qu'elle peut, pour un même fluide, varier en fonction des livraisons. De plus, pour les carburants, la viscosité est susceptible d'évoluer au cours d'une même distribution à la suite de fluctuations de températures. Aussi est-il parfois indispensable pour obtenir une précision de mesure suffisante de connaître en temps réel la viscosité ou le nombre de Reynolds du fluide dont on veut mesurer le volume débité, ces deux grandeurs étant proportionnelles.

On connaît diverses méthodes de mesure de la viscosité d'un fluide.

La méthode de Couette consiste d'une manière générale à mesurer la force de résistance mécanique au mouvement relatif de deux plaques l'une par rapport à l'autre sous l'action du déplacement d'une fine couche de fluide contenue entre les deux plaques. La viscosité dynamique $\mu$ du fluide est directement proportionnelle à la force de résistance mesurée. De façon pratique, les plaques sont généralement matérialisées par deux cylindres coaxiaux et la détermination de la viscosité se fait par mesure du couple nécessaire pour maintenir l'un des deux cylindres immobiles alors que l'autre est en mouvement à une vitesse de rotation donnée. Cette méthode, largement utilisée, présente l'avantage de permettre une mesure en continu. Par contre, les dispositifs de mise en oeuvre sont complexes et fragiles (guidages fins, présence d'un moteur, d'un couplemètre, etc....).

D'autres méthodes reposent sur la loi de Poiseuille qui indique que, dans un tube capillaire en régime d'écoulement laminaire, la perte de charge aux bornes du tube et le débit sont proportionnels, le coefficient de proportionnalité dépendant de la viscosité du fluide. Il existe de nombreux dispositifs fonctionnant selon ce principe. Le plus simple d'entre eux consiste en un tube capillaire vertical présentant un renflement central. La viscosité du fluide est mesurée par le temps nécessaire audit fluide pour s'écouler sous l'action de son propre poids entre deux repères placés de part et d'autre dudit renflement. Les inconvénients de ce type de technique sont les suivants :

- mesure non continue qui ne peut se faire que périodiquement par prélèvement de fluide,
- nécessité d'une intervention manuelle,
- chaque tube ne permet qu'une faible gamme de mesures. En effet, le diamètre du tube capillaire est défini de façon à garder un écoulement laminaire, c'est-à-dire une valeur faible du nombre de Reynolds. Or, le nombre Re de Reynolds étant dépendant de la viscosité dynamique $\mu$ du fluide (Re = $4\rho Q / \pi \mu d$ avec $\rho$ = masse volumique du fluide, Q = débit, d = diamètre du tube), un même tube ne peut être utilisé que pour une gamme limitée de viscosités,
- les tubes capillaires de très faible diamètre risquent facilement de se colmater.

Enfin, on peut noter que les deux méthodes décrites ci-dessus ne peuvent fonctionner qu'à des faibles débits Q, inférieurs à 1l/mm afin de rester en régime laminaire.

L'état de la technique le plus proche de l'invention est décrit dans les documents GB882478 et US5661232. Le document GB882478 décrit un débitmètre pour la mesure continue d'un débit de fluide dont la viscosité peut varier temporellement, en particulier d'un débit de carburant, comprenant deux branches parallèles avec des éléments capillaires et des débits qui sont proportionnels aux mêmes puissances des pertes de pressions $\Delta p$ causées par les éléments capillaires. Le document US5661232 décrit un viscomètre comprenant deux branches parallèles aux dimensions différentes et comprenant des débimètres de Coriolis.

Aussi, le problème technique à résoudre par l'objet de la présente invention est de proposer un procédé de mesure de la viscosité d'un fluide, qui permettrait une mesure simple, en continu et dans une large gamme de débits incluant des débits pouvant atteindre plusieurs dizaines de litres par minute.

La solution au problème technique posé consiste, selon l'invention en ce que ledit procédé comprend les étapes de la revendication 1. Un tel procédé peut être réalisé en utilisant un dispositif qui comporte :

- un élément viscosensible traversé par ledit fluide selon un régime d'écoulement laminaire,
- un premier débitmètre en régime turbulent en série avec ledit élément viscosensible,
- un deuxième débitmètre en régime turbulent en parallèle au moins sur l'élément viscosensible,

lesdits débitmètres étant aptes à déterminer la perte de charge $\Delta p$ et le débit q du fluide à travers l'élément viscosensible, la viscosité dynamique $\mu$ étant donnée par la relation $\mu = \Delta p/(q \cdot k)$ où k est une constante dépendant de l'élément viscosensible.

Le procédé de l'invention repose sur l'application de la loi de Poiseuille appliquée à l'élément viscosensible en régime laminaire soit $\Delta p = k\ \mu\ q$. La perte de charge $\Delta p$ et le débit q étant mesurés par les débitmètres en régime turbulent dont les caractéristiques dépendent aussi de la viscosité $\mu$ mais dans des proportions beaucoup plus faibles, ce qui ne conduit à des écarts significatifs que pour des pertes de charge élevées. La perte de charge $\Delta P$ aux bornes d'un débitmètre est alors une fonction quadratique du débit Q.

On comprend que le procédé de mesure de viscosité conforme à l'invention présente un certain nombre d'avantages par rapport aux viscosimètres connus. Il permet en effet une mesure en continu, donc en temps réel, à partir d'éléments simples, notamment des débitmètres existants, qui ne nécessitent pas de moteurs ou autres organes complexes. D'autre part, par un choix approprié de la forme et de la structure de l'élément viscosensible, il est possible d'obtenir un écoulement laminaire sur toute la gamme de viscosités à mesurer et de débits de fonctionnement.

Deux modes de réalisation du procédé de mesure, objet de l'invention, sont proposés. Selon le premier mode, le deuxième débitmètre est placé en parallèle sur le seul élément viscosensible, tandis que le deuxième mode de réalisation prévoit que le deuxième débitmètre est placé en parallèle sur l'ensemble constitué par l'élément viscosensible et le premier débitmètre. Le deuxième mode de réalisation offre l'avantage de ne pas additionner deux pertes de charge en série.

La description qui va suivre, en regard des dessins annexés donnés à titre d'exemples non limitatifs, fera bien comprendre en quoi consiste l'invention et comment elle peut être réalisée.

La figure 1 est un schéma d'un premier mode de réalisation d'un dispositif de mesure de la viscosité d'un fluide, conforme à l'invention.

La figure 2 est un schéma d'un deuxième mode de réalisation d'un dispositif de mesure de la viscosité d'un fluide, conforme à l'invention.

La figure 3 est un schéma du dispositif de mesure de la figure 2 équipé d'oscillateurs fluidiques.

La figure 4a est une vue de face d'un premier mode de réalisation d'un élément viscosensible de l'invention.

La figure 4b est une vue de dessus de l'élément viscosensible de la figure 4a.

La figure 5 est une vue en perspective d'un deuxième mode de réalisation d'un élément viscosensible de l'invention.

La figure 6 est une vue de côté d'un troisième mode de réalisation d'un élément viscosensible de l'invention.

La figure 7 est une vue en perspective d'un quatrième mode de réalisation d'un élément viscosensible de l'invention.

La figure 8 est une vue en perspective d'un cinquième mode de réalisation d'un élément viscosensible de l'invention.

La figure 9 est une vue en perspective d'un sixième mode de réalisation d'un élément viscosensible de l'invention.

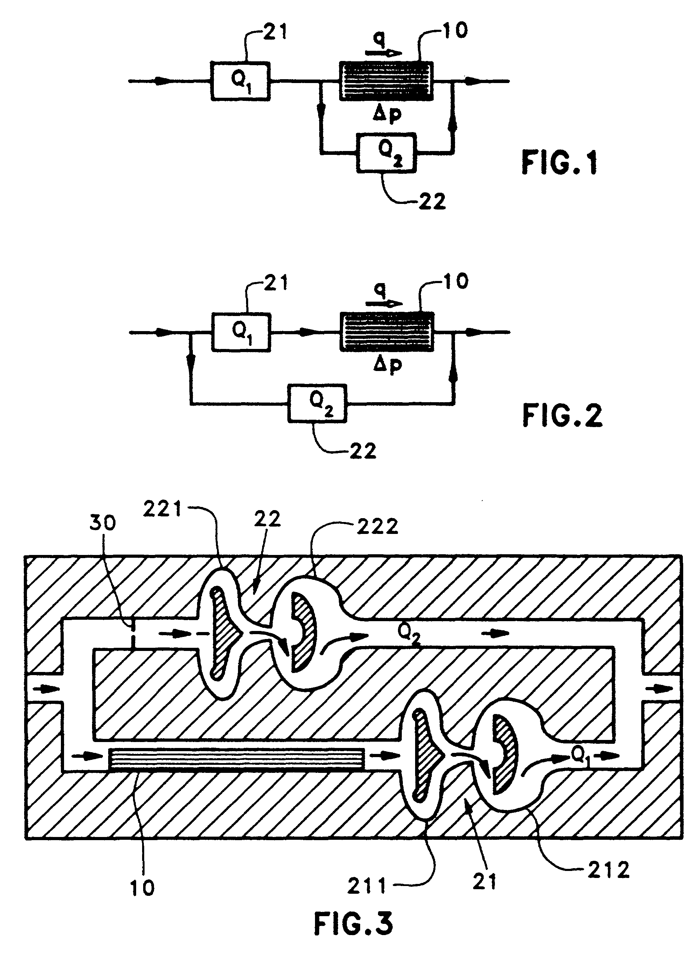

Le schéma de la figure 1 représente un dispositif de mesure de la viscosité d'un fluide comportant un élément viscosensible 10 traversé par ledit fluide selon un régime d'écoulement laminaire en ce sens que la perte de charge $\Delta p$ aux bornes de l'élément viscosensible 10 et le débit q de fluide sont reliés par la relation :

$$\Delta p = k\ \mu\ q \qquad (1)$$

où $\mu$ est la viscosité dynamique du fluide et k une constante dépendant de l'élément viscosensible.

A débit q connu, la mesure de la valeur de la perte de charge $\Delta p$ donne une indication directement proportionnelle à la viscosité à mesurer.

D'un point de vue pratique, une mesure précise de la perte de charge en fonctionnement dynamique n'est pas toujours facile et peut être perturbée dans bon nombre d'installations hydrauliques par la présence de vibrations dues aux pompes ou autres organes en mouvement. Il est donc préférable de mesurer non pas la perte de charge $\Delta p$ mais de l'utiliser pour faire varier le débit de fluide dans un circuit dérivé. La mesure de viscosité s'obtient alors par une mesure de débit.

Plus précisément, les grandeurs $\Delta p$ et q sont mesurées par deux débitmètres 21, 22 fonctionnant en régime turbulent de manière à obtenir une relation de perte de charge $\Delta P$/débit Q, pour chaque débitmètre, du type $\Delta P = a\ Q^2$ où a est sensiblement indépendant de la viscosité. Dans le cas du schéma de la figure 1, le premier débitmètre 21 est en série avec l'élément viscosensible 10 tandis que le deuxième débitmètre 22 est en parallèle sur ledit élément viscosensible. Dans ces conditions, $\Delta p$ et q sont donnés par :

$$\Delta p = \Delta P_2 = a_2 Q_2^2 \qquad q = Q_1 - Q_2$$

En remplaçant $\Delta p$ et q dans la relation (1), on obtient :

$$a_2 Q_2^2 = k \mu (Q_1 - Q_2)$$

Ce qui donne finalement en posant $x = Q_2/Q_1$ et $Qt = Q_1$, débit total :

$$\mu = (a_2/k) x^2 Qt / (1 - x) \qquad (2)$$

La viscosité $\mu$ est donc définie par le rapport $Q_2/Q_1$ et le débit total Qt, le coefficient $a_2/k$ étant connu par étalonnage préalable.

Bien entendu, le débitmètre 21 pourrait également être situé en aval de l'élément viscosensible 10.

Selon la variante de réalisation de la figure 2, le deuxième débitmètre 22 est placé en parallèle sur l'ensemble constitué par l'élément viscosensible 10 et le premier débitmètre 21.

On a alors :

$$q = Q_1 \qquad \text{et} \qquad \Delta p = a_2 Q_2^2 - a_1 Q_1^2$$

En remplaçant $\Delta p$ et q dans la relation (1), on obtient :

$$a_2 Q_2^2 - a_1 Q_1^2 = k \mu Q_1$$

Soit avec $Q_t = Q_1 + Q_2$ = débit total et $x = Q_2/Q_1$

$$\mu = (1/k) (a_2 x^2 - a_1) Q_t / (x + 1) \qquad (3)$$

Là encore, la viscosité $\mu$ s'exprime en fonction du rapport $Q_2/Q_1$ et du débit total $Q_t$, les coefficients $a_1/\mu$ et $a_2/\mu$ étant connus par étalonnage préalable.

Notons que le montage de la figure 2 a, par rapport à celui de la figure 1, l'avantage de ne pas cumuler de pertes de charge en série.

Les deux dispositifs de mesure des figures 1 et 2 conduisent au même résultat, à savoir que la viscosité $\mu$ s'exprime en fonction du paramètre x et du débit total $Q_t$. Par étalonnage à différents débits et avec des fluides de viscosités différentes connues, il est possible, soit d'utiliser directement les fonctions analytiques de x et de $Q_t$, correspondant aux formules (2) et (3), soit de créer une table qui permet ensuite de déterminer à tout moment et en temps réel la viscosité du fluide à partir des valeur de x et de $Q_t$.

Les expressions mathématiques établies plus haut supposent que les coefficients $a_1$ et $a_2$ des deux débitmètres sont indépendants de la viscosité $\mu$. S'il s'avérait nécessaire de tenir compte d'une variation de ces coefficients avec la viscosité, on pourrait utiliser un développement du type :

$$a_i = c_i \mu^2 + d_i \mu + e_i$$

Ceci conduit à une expression plus complexe de la viscosité $\mu$ sans changer pour autant le principe de la mesure et de son dispositif. Les coefficients $c_i$, $d_i$ et $e_i$ sont déterminés par étalonnage préalable.

Les débitmètres 21, 22 peuvent être des compteurs volumétriques, mécaniques ou statiques, associés à une mesure de temps ou de fréquence. En particulier, la figure 3 montre une réalisation dans laquelle les débitmètres 21, 22 sont des oscillateurs fluidiques, identiques par exemple. La fréquence d'oscillation F du jet de fluide dans les cavités 212, 222 après mise en forme dans les conditionneurs 211, 221 est, en première approximation, proportionnelle au débit Q. La mesure de débit revient donc à une mesure de fréquence.

Comme le montre la figure 3, les deux débitmètres 21, 22 ainsi que l'élément viscosensible 10 peuvent être inclus dans un même bloc compact pour ne former qu'un seul sous-ensemble.

La figure 3 indique également que pour des raisons d'équilibrage de débits entre les différentes branches, surtout à bas débits, il peut y avoir avantage à utiliser un diaphragme 30 de réduction de débit de manière à augmenter la valeur des coefficients $a_2$, ou ai, selon les besoins.

Comme cela a été expliqué plus haut, l'élément viscosensible 10 doit fonctionner en régime d'écoulement laminaire, d'où l'idée d'utiliser un profil du type tube capillaire. Cependant le faible diamètre d'un capillaire présente les inconvénients suivants :

-    faible débit pour une perte de charge donnée,
-    vitesse du fluide élevée, ce qui est incompatible avec le régime laminaire désiré (le régime laminaire est obtenu pour des nombres de Reynolds inférieurs à 2000).

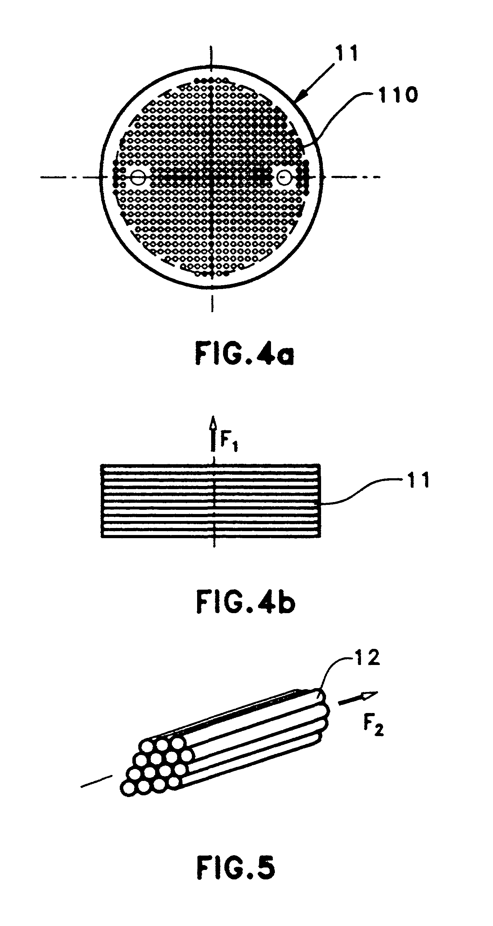

Aussi, afin de permettre un débit conséquent tout en gardant des vitesses d'écoulement faible, l'élément viscosensible 10 est une structure composée de n éléments capillaires mis en parallèle dont des exemples sont donnés sur les figures 4a à 9.

L'élément viscosensible des figures 4a et 4b est équivalent à n tubes mis en parallèle. Il est réalisé au moyen de N plaques élémentaires 11, chacune percée de n trous 110 placés en correspondance de manière à former des canaux parallèles à la direction $F_1$ de l'écoulement. Le nombre N de plaques élémentaires est choisi de façon à obtenir la longueur souhaitée.

La figure 5 est un assemblage de n tubes élémentaires 12 parallèles à la direction $F_2$ d'écoulement, groupés selon un empilement hexagonal compact.

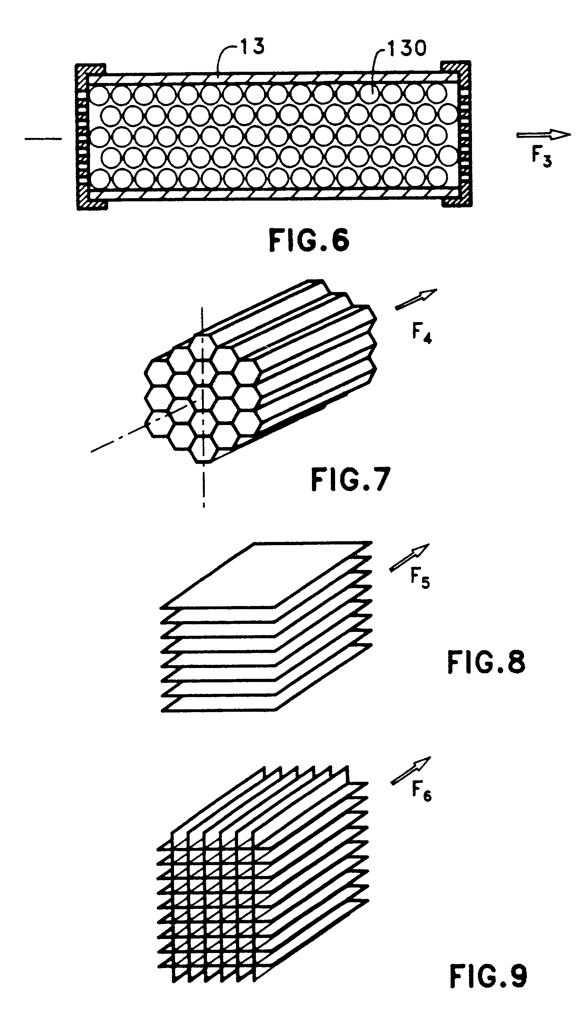

L'élément viscosensible de la figure 6 est un bloc de billes 130 maintenues par compression dans un logement 13. L'écoulement parallèlement à $F_3$ se fait à travers les interstices interbilles.

L'assemblage de la figure 7 est équivalent à celui de la figure 5 avec une structure en nid d'abeilles de direction d'écoulement $F_4$.

Les figures 8 et 9 montrent des éléments viscosensibles réalisés avec des plaques parallèles à la direction $F_5$, $F_6$ d'écoulement. La structure de la figure 8 est formée d'un seul ensemble de plaques parallèles tandis que la structure de la figure 9 est à deux ensembles de plaques perpendiculaires, formant grille. Les paramètres géométriques de ces éléments (longueur d'écoulement, section de passage du fluide, nombre d'éléments mis en parallèle) sont définis en fonction des paramètres suivants :

- gamme de viscosité à détecter,
- gamme de débit de fonctionnement,
- caractéristiques hydrauliques (perte de charge) des différents éléments du système.

## Revendications

1. Procédé d'amélioration de la précision de mesure en continu d'un débit de fluide, en particulier du débit de fluide délivré par un appareil de distribution, notamment par un distributeur de carburant, corrigé de l'influence de la viscosité, **caractérisé en ce que** :

   - on subdivise le flux total Qt à mesurer qui circule dans une canalisation principale en deux flux partiels s'écoulant dans deux branches parallèles, à savoir une première branche comportant un élément viscosensible (10) traversé par un débit partiel q de fluide en régime d'écoulement laminaire et une seconde branche dans laquelle circule un débit partiel $Q_2$ de fluide en régime turbulent, la perte de charge $\Delta p$ aux bornes de l'élément viscosensible (10) étant reliée au débit q de fluide traversant cet élément par la relation :

   $$\Delta p = k\mu q$$

   dans laquelle $\mu$ est la viscosité dynamique du fluide et k une constante dépendant de l'élément viscosensible (10),

   - on monte d'une part un premier débitmètre (21) traversé par un débit $Q_1$ de fluide en régime turbulent en série avec l'élément viscosensible (10) dans la canalisation principale ou dans la première branche et d'autre part un second débitmètre (22) identique au premier débitmètre (21) dans la seconde branche, la perte de charge $\Delta P$ aux bornes de ces deux débitmètres (21, 22) étant une fonction quadratique du débit Q qui les traverse,

   - dans une étape préliminaire on étalonne les deux débitmètres (21, 22) à différents débits Q et avec des fluides de viscosité $\mu$ différentes connues de façon à déterminer la relation existant entre la valeur du débit Q mesurée par ces débitmètres et la valeur réelle de ce débit en fonction de la viscosité $\mu$ du fluide,

   - on calcule en continu la viscosité du fluide circulant dans la canalisation principale et dans les deux branches parallèles à partir des valeurs de mesure du débit total Qt et des débits $Q_1$ et $Q_2$ traversant les deux débitmètres (21, 22), et

   - on corrige en continu la valeur de mesure Qt du débit total en fonction de la viscosité ainsi calculée à partir de la relation déterminée au cours de l'étape d'étalonnage préliminaire.

2. Procédé selon la revendication 1, **caractérisé en ce que** l'on monte le second débitmètre (22) en parallèle sur l'ensemble constitué par l'élément viscosensible (10) et le premier débitmètre (21).

3. Procédé selon la revendication 2, **caractérisé en ce que** l'on calcule en continu la viscosité $\mu$ du fluide circulant dans la canalisation principale et dans les deux branches parallèles de la façon suivante :

   - on considère que la perte de charge $\Delta P$ aux bornes des deux débitmètres (21, 22) est reliée au débit Q de fluide traversant ces débitmètres par la relation :

   $$\Delta P = a\, Q^2$$

   dans laquelle a est un paramètre dépendant du débitmètre, sensiblement indépendant de la viscosité,

   - le débit q traversant l'élément viscosensible (10) étant égal au débit Q1 traversant le premier débitmètre (21) et la perte de charge $\Delta p$ aux bornes de l'élément viscosensible (10) étant définie par la relation :

   $$\Delta p = a_2\, Q_2^{\,2} - a_1\, Q_1^{\,2}$$

on remplace le débit q et la perte de charge $\Delta p$ par leurs valeurs respectives dans la relation $\Delta p = k\mu q$ reliant la perte de charge $\Delta p$ aux bornes de l'élément viscosensible (10) et le débit q de fluide traversant cet élément de façon à obtenir la relation :

$$a_2 \, Q_2{}^2 - a1 \, Q_1{}^2 = k\mu \, Q_1$$

et

- on exprime la viscosité $\mu$ en fonction de la valeur de mesure du débit total $Qt = Q_1 + Q_2$ et du rapport $x = Q_2/Q_1$ des débits mesurés par les deux débitmètres (21, 22) par la relation :

$$\mu = (1/k) \, (a_2 \, x^2 - a_1) \, Qt \, / \, (x + 1)$$

les coefficients $a_1/k$ et $a_2/k$ ayant été déterminés lors de l'étape d'étalonnage préalable.

**4.** Procédé selon l'une quelconque des revendications 1 à 3,
    **caractérisé en ce que**
    l'on monte un diaphragme (30) en série avec au moins l'un des deux débitmètres (21, 22).

**5.** Procédé selon l'une quelconque des revendications 1 à 4,
    **caractérisé en ce que**
    les débitmètres sont des compteurs volumétriques associés à une mesure temporelle.

**6.** Procédé selon la revendication 5,
    **caractérisé en ce que**
    les compteurs volumétriques sont des compteurs mécaniques.

**7.** Procédé selon la revendication 5,
    **caractérisé en ce que**
    les compteurs volumétriques sont des oscillateurs fluidiques.

**8.** Procédé selon la revendication 5,
    **caractérisé en ce que**
    les compteurs volumétriques sont des compteurs à ultrasons.

**9.** Procédé selon l'une quelconque des revendications 1 à 8,
    **caractérisé en ce que**
    l'élément viscosensible (10) est une structure composée de n éléments capillaires mis en parallèle.

**10.** Procédé selon l'une quelconque des revendications 1 à 8,
    **caractérisé en ce que**

l'élément viscosensible (10) est réalisé au moyen de N plaques élémentaires (11) chacune percée de n trous (110) placés en correspondance de manière à former des canaux parallèles à la direction de l'écoulement.

**Patentansprüche**

**1.** Verfahren zur Verbesserung der Genauigkeit der fortlaufenden Messung einer Fluidmenge, insbesondere der von einem Verteilgerät, vor allem von einem Kraftstoffverteiler, gelieferten Fluidmenge, korrigiert um den Einfluss der Viskosität, **dadurch gekennzeichnet, dass**

- der zu messende Gesamtfluss Qt, der in einer Hauptrohrleitung fließt, in zwei Teilflüsse unterteilt wird, welche in zwei parallelen Zweigen fließen, nämlich einem ersten Zweig, der ein von einer Fluidteilmenge q im Laminarströmungsbetrieb durchströmtes viskosensibles Element (10) enthält, und einem zweiten Zweig, in dem eine Fluidteilmenge $Q_2$ im Wirbelbetrieb fließt, wobei der Druckverlust $\Delta p$ an den Anschlüssen des viskosensiblen Elements (10) mit der dieses Element durchströmenden Fluidmenge q durch folgende Beziehung verbunden ist:

$$\Delta p = k\mu q$$

worin $\mu$ die dynamische Viskosität des Fluids und k eine von dem viskosensiblen Element (10) abhängige Konstante ist,
- einerseits ein von einer Fluidmenge $Q_1$ im Wirbelbetrieb durchströmter erster Durchflussmesser (21) in Reihe mit dem viskosensiblen Element (10) in der Hauptrohrleitung oder in dem ersten Zweig angeordnet wird und andererseits ein mit dem ersten Durchflussmesser (21) identischer zweiter Durchflussmesser (22) in dem zweiten Zweig angeordnet wird, wobei der Druckverlust $\Delta P$ an den Anschlüssen dieser beiden Durchflussmesser (21, 22) eine quadratische Funktion der sie durchfließenden Menge Q ist,
- in einem vorangehenden Schritt die beiden Durchflussmesser (21, 22) auf verschiedene Mengen Q und mit Fluids verschiedener bekannter Viskositäten $\mu$ geeicht werden, derart, dass die Beziehung zwischen dem Wert der durch diese Durchflussmesser gemessenen Menge Q und dem tatsächlichen Wert dieser Menge in Abhängigkeit von der Viskosität $\mu$ des Fluids bestimmt wird,
- eine fortlaufende Berechnung der Viskosität des in der Hauptrohrleitung und in den beiden parallelen Zweigen strömenden Fluids ausgehend von den Messwerten des Gesamtflusses Qt und der die beiden Durchflussmesser (21, 22) durchströmenden Durchflussmengen $Q_1$ und $Q_2$ erfolgt, und

- eine fortlaufende Korrektur des Messwertes Qt des Gesamtflusses in Abhängigkeit von der so berechneten Viskosität ausgehend von der im Laufe des vorangehenden Eichungsschrittes bestimmten Beziehung erfolgt.

2. Verfahren nach Anspruch 1, **dadurch gekennzeichnet, dass** der zweite Durchflussmesser (22) zu der von dem viskosensiblen Element (10) und dem ersten Durchflussmesser (21) gebildeten Gesamtanordnung parallel geschaltet wird.

3. Verfahren nach Anspruch 2, **dadurch gekennzeichnet, dass** die Viskosität $\mu$ des in der Hauptrohrleitung und in den beiden parallelen Zweigen fließenden Fluids auf folgende Weise fortlaufend berechnet wird:

- Unter Berücksichtigung, dass der Druckverlust $\Delta P$ an den Anschlüssen der beiden Durchflussmesser (21, 22) durch die folgende Beziehung mit der die diese Durchflussmesser durchströmenden Fluidmenge Q verbunden ist:

$$\Delta P = a\, Q^2$$

worin a ein von dem Durchflussmesser abhängiger Parameter und im wesentlichen von der Viskosität unabhängig ist,

- wobei die das viskosensible Element (10) durchströmende Menge q gleich der den ersten Durchflussmesser (21) durchströmenden Menge Q1 ist und wobei der Druckverlust $\Delta p$ an den Anschlüssen des viskosensiblen Elements (10) durch folgende Beziehung definiert ist:

$$\Delta p = a_2\, Q_2^{\,2} - a_1\, Q_1^{\,2}$$

werden die Menge q und der Druckverlust $\Delta p$ durch ihre jeweiligen Werte in der Beziehung $\Delta p = k\mu q$ ersetzt, welche den Druckverlust $\Delta p$ an den Anschlüssen des viskosensiblen Elements (10) und die dieses Element durchströmende Fluidmenge q verbindet, so dass folgende Beziehung erhalten wird:

$$a_2\, Q_2^{\,2} - a_1\, Q_1^{\,2} = k\mu\, Q_1$$

und

- wird die Viskosität $\mu$ in Abhängigkeit von dem Messwert des Gesamtflusses Qt = $Q_1 + Q_2$ und von dem Verhältnis x = $Q_2/Q_1$ der durch die beiden Durchflussmesser (21, 22) gemessenen Durchflussmengen durch folgende Beziehung ausgedrückt:

$$\mu = (1/k)\,(a_2\, x^2 - a_1)\, Qt\, /\, (x + 1)$$

wobei die Koeffizienten $a_1/k$ und $a_2/k$ während des vorangehenden Eichungsschrittes bestimmt worden sind.

4. Verfahren nach irgendeinem der Ansprüche 1 bis 3, **dadurch gekennzeichnet, dass** eine Blende (30) in Reihe mit wenigstens einem der beiden Durchflussmesser (21, 22) angeordnet wird.

5. Verfahren nach irgendeinem der Ansprüche 1 bis 4, **dadurch gekennzeichnet, dass** die Durchflussmesser einer zeitlichen Messung zugeordnete Volumenmesser sind.

6. Verfahren nach Anspruch 5, **dadurch gekennzeichnet, dass** die Volumenmesser mechanische Zähler sind.

7. Verfahren nach Anspruch 5, **dadurch gekennzeichnet, dass** die Volumenmesser Flüssigkeitsoszillatoren sind.

8. Verfahren nach Anspruch 5, **dadurch gekennzeichnet, dass** die Volumenmesser Ultraschallmesser sind.

9. Verfahren nach irgendeinem der Ansprüche 1 bis 8, **dadurch gekennzeichnet, dass** das viskosensible Element (10) eine von n parallel angeordneten Kapillarelementen gebildete Struktur ist.

10. Verfahren nach irgendeinem der Ansprüche 1 bis 8, **dadurch gekennzeichnet, dass** das viskosensible Element (10) mittels N Elementarplatten (11) ausgeführt ist, die jeweils von n sich deckenden Löchern (110) durchbohrt sind, so dass parallel zur Strömungsrichtung verlaufende Kanäle gebildet werden.

## Claims

1. Method of improving the accuracy of a continuous measurement of a fluid flow, in particular the flow of fluid delivered by a dispensing system, in particular by a fuel dispenser, corrected to compensate for the effect of viscosity,
**characterised in that**:

- the total flow Qt to be measured circulating in a main passage is sub-divided into two partial flows flowing in two parallel branches, namely a first branch having a viscosity-sensitive element (10) through which a partial flow q of fluid with a laminar flow pattern passes and a second branch in which a partial flow $Q_2$ of fluid with a turbulent flow pattern circulates, the drop in pressure $\Delta p$ at the terminals of the viscosity-sensitive element (10) being correlated to the flow q of fluid passing through this element by the equation:

$$\Delta p = k\mu q$$

in which $\mu$ is the dynamic viscosity of the fluid and k is a constant dependent on the viscosity-sensitive element (10),
- a first flow meter (21) traversed by a flow $Q_4$ with a turbulent pattern flow is connected in series with the viscosity-sensitive element (10) in the main passage or in the first branch, on the one hand, and a second flow meter (22) identical to the first flow meter (21) in the second branch, on the other, the drop in pressure $\Delta P$ at the terminals of these two flow meters (21, 22) being a quadratic function of the flow Q passing through them,
- in a preliminary step, the two flow meters (21, 22) are calibrated to different flows Q and with fluids of a differing known viscosity $\mu$ so as to determine the correlation existing between the value of the flow Q measured by these flow meters and the real value of this flow as a function of the viscosity $\mu$ of the fluid,
- the viscosity of the fluid circulating in the main passage and in the two parallel branches is continuously calculated on the basis of the measured values of the total flow Qt and the flows $Q_1$ and $Q_2$ passing through the two flow meters (21, 22) and
- the measurement value Qt of the total flow is continuously corrected as a function of the viscosity thus calculated on the basis of the correlation determined during the preliminary calibration step.

2. Method as claimed in claim 1,
   **characterised in that**
   the second flow meter (22) is mounted in parallel on the unit comprising the viscosity-sensitive element (10) and the first flow meter (21).

3. Method as claimed in claim 2,

   **characterised in that**
   the viscosity $\mu$ of the fluid circulating in the main passage and in the two parallel branches is calculated continuously in the following manner:

   - the drop in pressure $\Delta P$ at the terminals of the two flow meters (21, 22) is assumed to be correlated to the flow rate Q of fluid passing through these flow meters by the equation:

   $$\Delta P = a\,Q^2$$

   in which a is a parameter dependent on the flow meter, essentially independent of the viscosity,
   - the flow q passing through the viscosity-sensitive element (10) being equal to the flow Q1 passing through the first flow meter (21) and the drop in pressure $\Delta p$ at the terminals of the viscosity-sensitive element (10) being defined by the equation:

   $$\Delta p = a_2\,Q_2^{\,2} = a_1\,Q_1^{\,2}$$

   the flow q and the drop in pressure $\Delta p$ axe replaced by their respective values in the equation $\Delta p = k\mu q$ correlating the drop in pressure $\Delta p$ at the terminals of the viscosity-sensitive element (10) and the flow q of fluid passing through this element in order to obtain the equation:

   $$a_2\,Q_2^{\,2} - a1\,Q_1^{\,2} = k\mu\,Q_1$$

   and
   - the viscosity $\mu$ is expressed as a function of the measured value of the total flow $Qt = Q_1 + Q_2$ and the equation $x = Q_2/Q_1$ of the flow rates measured by the two flow meters (21, 22) by the equation:

   $$\mu = (1/k)\,(a_2\,x^2 - a_1)\,Qt\,/\,(x + 1)$$

   the coefficients $a_1/k$ and $a_2/k$ having been determined during the calibration step beforehand.

4. Method as claimed in any one of claims 1 to 3,
   **characterised in that**
   a diaphragm (30) is connected in series with at least one of the two flow meters (21, 22).

5. Method as claimed in any one of claims 1 to 4,
   **characterised in that**
   the flow meters are volumetric counters associated with a time measurement.

6. Method as claimed in claim 5,
**characterised in that**
the volumetric counters are mechanical counters.

7. Method as claimed in claim 5,
**characterised in that**
the volumetric counters are fluid oscillators.

8. Method as claimed in claim 5,
**characterised in that**
the volumetric counters are ultrasound counters.

9. Method as claimed in any one of claims 1 to 8,
**characterised in that**
the viscosity-sensitive element (10) is a structure made up of n capillary elements arranged in parallel.

10. Method as claimed in any one of claims 1 to 8,
**characterised in that**
the viscosity-sensitive element (10) is made up of N elementary plates (11), each being pierced with n holes (110) in a matching layout so as to form passages parallel with the direction of flow.

FIG.1

FIG.2

FIG.3

11

**FIG.4a**

$F_1$

11

**FIG.4b**

12

$F_2$

**FIG.5**

FIG.6

FIG.7

FIG.8

FIG.9